**Europäisches Patentamt**

**European Patent Office**

**Office européen des brevets**

(19)

(11) Numéro de publication: **0 033 785**
**A1**

# (12) DEMANDE DE BREVET EUROPEEN

(21) Numéro de dépôt: **80200105.7**

(22) Date de dépôt: **08.02.80**

(51) Int. Cl.³: **G 05 B 9/03,** G 21 D 3/04,
G 06 F 11/16

(43) Date de publication de la demande: **19.08.81**
**Bulletin 81/33**

(84) Etats contractants désignés: **AT BE CH DE FR GB IT LU NL SE**

(71) Demandeur: **ATELIERS DE CONSTRUCTIONS ELECTRIQUES DE CHARLEROI (ACEC) Société Anonyme, 54, Chaussée de Charleroi, B-1060 Bruxelles (BE)**

(72) Inventeur: **Vogel, Christian, Ferme du Bois d'Aywiers, B-1338 Lasne (BE)**
Inventeur: **Jauquet, Christian, Rue du Panorama, B-6110 Montigny-Le-Tilleul (BE)**
Inventeur: **Gillet, Auguste, Avenue de la Paix, 53, B-6100 Mont-Sur-Marchienne (FR)**
Inventeur: **Claes, Joseph, Rue Saint Martin, 49, B-6428 Ham Sur Heure (BE)**

(74) Mandataire: **Bossard, Franz et al, ACEC - Service des Brevets Boîte Postale 4, B-6000 Charleroi (BE)**

(54) **Installation de commande de sécurité de processus industriel.**

(57)    La présente invention a pour objet une installation programmée de commande de sécurité de processus industriel applicable à la commande d'équipements de protection et de sécurité d'une centrale nucléaire.

L'installation de commande suivant l'invention est basée sur un abandon du traitement en synchronisme dans les différentes chaînes et sur le recours à un polymorphisme des équipements programmés. Elle comprend plusieurs chaînes de traitement de données (15, 16) parallèles, chacune comprenant des appareils (1, 2) mesurant ou détectant des variables de processus, et des dispositifs de commande (32) influençant le processus. Elle est caractérisée en ce que, dans chaque chaîne, l'équipement de traitement de données comprend un ensemble-gouverneur (15) programmé composé d'un contrôleur programmé d'évolution du traitement de données relié au calculateur de processus (16).

Un sommateur de sécurité (27) est disposé en aval de chaque sortie du calculateur de processus (16) et en amont du dispositif de commande (32) influençant le processus qu'il actionne, correspondant à cette sortie, chacun de ces sommateurs (27) étant relié au contrôleur programmé d'évolution pour recevoir un signal de santé.

ACTORUM AG

## INSTALLATION DE COMMANDE DE SECURITE DE PROCESSUS INDUSTRIEL.

La présente invention a pour objet une installation de commande de sécurité de processus industriel applicable, par exemple, à la commande d'équipements de protection et de sécurité d'une centrale nucléaire.

Le but de l'invention est une installation programmée dotée de garanties extrèmement poussées de sécurité et de fiabilité.

Des installations de commande de processus industriel de ce genre sont en principe connues et sont constituées d'au moins une chaîne, en général trois chaînes parallèles , chacune comprenant des appareils mesurant ou détectant des variables de processus, un équipement de traitement de données associé à au moins un calculateur de processus et des dispositifs de commande influençant le processus, actionnés par les sorties du dit équipement de traitement de données. Tandis que dans le cas de trois chaînes parallèles, les appareils de mesure et de détection pour chaque variable ou paramètre sont au nombre de trois, les dispositifs de commande influençant le processus sont en principe uniques et actionnés par un circuit de votation "deux sur trois", sauf si trois de ces appareils peuvent être commandés pour fonctionner directement comme circuit de votation 2/3. Une telle installation connue est par exemple décrite dans le brevet belge 847 141.

Il est également connu de contrôler dans plusieurs chaînes parallèles de constitutions semblables ou identiques la simultanéité, pouvant aller jusqu'au synchronisme total, des traitements de données opérant sur des entrées identiques ou supposées identiques en cas de fonctionnement normal. Dans ce cas, les circuits nécessaires à la commande et au contrôle du synchronisme des chaînes de traitement parallèles, que ce soit au niveau des horloges ou au niveau du dialogue entre chaînes, introduisent un risque important de pannes dites de mode commun, ce qui peut entraîner un blocage complet de toutes les chaînes de traitement.

Un des buts de l'invention est de remédier à cet inconvénient et d'assurer en plus une protection plus profonde en évitant, autant que possible, toute cause de panne de mode commun.

Suivant l'invention ce résultat est atteint par un abandon du traitement en synchronisme dans les différentes chaînes et par le recours à un polymorphisme des équipements programmés.

28.45/1786.

Un autre but de l'invention est de lutter contre des erreurs de programmation par le moyen du polymorphisme des équipements programmés. Une erreur de programmation constitue en quelque sorte une cause d'erreur de mode commun puisqu'une même erreur de programmation se retrouve dans chaque chaîne lorsque celles-ci fonctionnent en synchronisme. La polymorphie des équipements programmés peut être réalisée entre les différentes chaînes de traitement par le choix d'un calculateur différent dans chaque chaîne et programmé par une équipe différente. Cependant, selon l'invention, cette polymorphie est réalisée, avant tout, au niveau de chaque chaîne elle-même par des calculateurs exécutant des fonctions complémentaires selon des programmes fondamentalement différents.

Dans l'installation suivant l'invention l'équipement de traitement de données de chaque chaîne comprend un calculateur de processus qui effectue de manière classique, et selon une logique fonctionnelle propre au processus à commander, une série de manoeuvres sur des variables de sortie en fonction de l'état de variables d'entrée.

L'invention est caractérisée en ce que, dans chaque chaîne, l'équipement de traitement de données comprend un ensemble-gouverneur programmé composé d'un contrôleur programmé d'évolution du traitement de données relié au calculateur de processus, en ce que le calculateur de processus émet vers le contrôleur programmé d'évolution, pour chaque phase de traitement de données à effectuer, un signal d'identification de la phase en question, attend de recevoir du contrôleur programmé d'évolution un signal de début permettant l'exécution de la phase de traitement de données identifiée, et émet, à la fin de cette phase, un signal vers le contrôleur programmé, en ce que le contrôleur programmé vérifie la suite logique des différentes phases de traitement de données exécutées par le calculateur et contrôle le temps consacré à l'exécution de chaque phase pour émettre un signal de santé si tout est normal et en ce qu'un sommateur de sécurité est disposé en aval de chaque sortie du calculateur de processus et en amont du dispositif de commande influençant le processus qu'il actionne, correspondant à cette sortie, chacun de ces sommateurs étant relié au contrôleur programmé d'évolution pour recevoir le dit signal de santé, chacun de ces sommateurs se mettant dans une condition de sortie dite "de sécurité" lorsque le signal de santé présente une anomalie. Ceci peut se produire dans deux cas: soit que l'ensemble gouverneur a décelé une anomalie dans le fonctionnement du calculateur de processus, provenant par exemple d'un mauvais fonctionnement du calculateur lui-même ou provenant d'une discordance entre calculateur et ensemble gouverneur résultant d'une défaillance de l'ensemble gouverneur, soit d'une défaillance de l'ensemble gouverneur qui le rend incapable d'entretenir le signal de santé. Lorsque, comme c'est généralement le cas, l'installation comprend plusieurs chaînes d'équipements de traitement de données parallèles, par exemple trois, le polymorphisme peut jouer dans les différentes chaînes en utilisant dans une chaîne des équipements de traitement de données différentes de ceux installés dans les autres chaînes, notamment provenant d'autres producteurs et utilisant d'autres languages de programmation. Ceci permet d'augmenter sensiblement les garanties de détection d'erreurs de programmation, notamment l'oubli de certaines configurations d'entrée spéciales, rares. Le bon fonctionnement du calculateur peut être testé continuellement de plusieurs manières: le contrôle de l'évolution du programme déjà mentionné, l'incorporation de tests répétitifs et fréquents de la réaction de l'équipement à des configurations d'entrée dangereuses, et un auto-test des variables d'entrée tant en ce qui concerne les variables analogiques que des variables logiques.

Outre la fonction de contrôler l'évolution du traitement de données dans le calculateur de processus, l'ensemble gouverneur peut englober la fonction de testeur. Selon l'invention, de tels tests doivent être exécutés de manière entrelacée avec le traitement effectué sur les variables réelles venant du processus. L'ensemble gouverneur injecte cycliquement des configurations de test à l'entrée du calculateur de processus ou à l'entrée de circuits de votation sans que le calculateur ou le circuit de votation ne soit prévenu ou capable de le détecter. Il est ainsi possible de vérifier cycliquement que le calculateur est toujours capable de répondre à l'ensemble des configurations réputées dangereuses pour le processus. La fonction de testeur inclut l'auto-test effectué sur les appareils de mesure analogiques. Cet auto-test est réalisé grâce à une redondance des appareils de mesure analogiques mesurant la valeur d'une même variable ou d'un même paramètre. La fonction d'auto-test est réalisée par le calculateur de processus en effectuant un test de cohérence des valeurs acquises pour une même variable ou un même paramètre.

Un auto-test effectué sur les détecteurs de variables logiques est réalisé en attribuant aux variables logiques un caractère dynamique par une commutation cyclique de la logique (logique directe - logique indirecte). Ce caractère dynamique est imposé au niveau des entrées logiques physiques en injectant un signal alterné sur une paire de conducteurs d'état reliée à tous les détecteurs d'une chaîne. Simultanément, le même caractère dynamique est aussi imposé au signal de santé. En cas de disparition de ce caractère dynamique d'une ou de plusieurs sorties ou de celui du signal de santé, les sorties des sommateurs de sécurité en aval de chacune des sorties défectueuses du calculateur de processus se met en condition dite "de sécurité".

D'autres caractéristiques de l'invention ressortiront de la description ci-dessous d'un exemple d'une forme d'exécution représentée au dessin annexé. Les figures 1 et 2 de ce dessin représentent deux parties d'un seul et même schéma d'une installation de commande de sécurité de processus industriel suivant l'invention. La figure 3 est un schéma de détail.

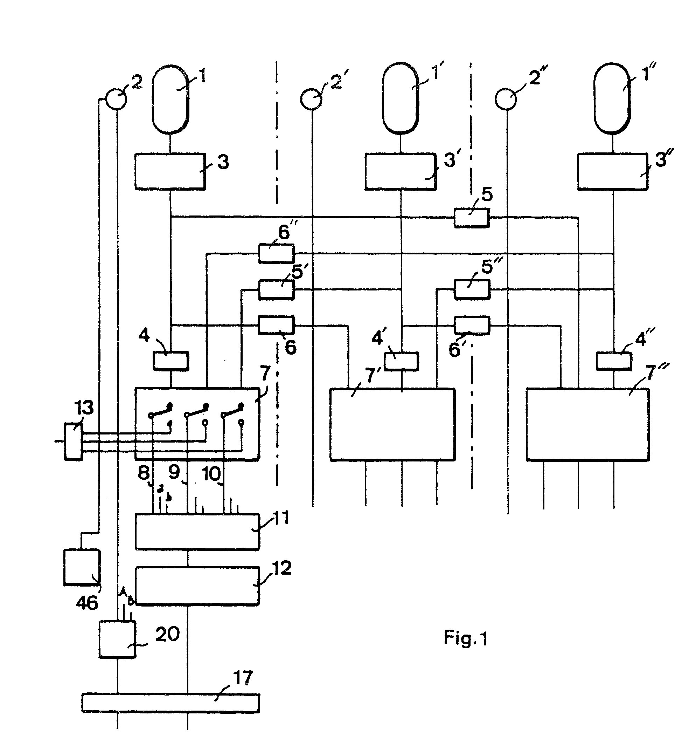

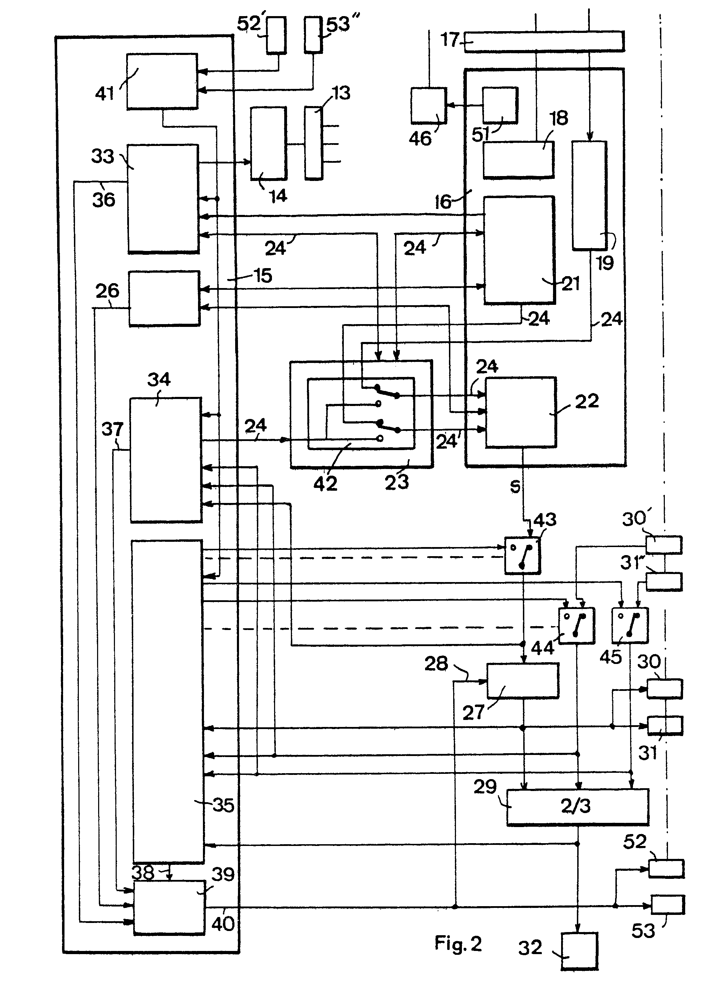

Une installation de commande de sécurité de processus industriel, du type à état préférentiel, représentée aux figures 1 et 2 est constituée d'un équipement de traitement de données associé à un calculateur de processus d'une part et d'appareils mesurant, détectant ou commandant des variables ou paramètres du processus d'autre part. Une telle installation est souvent très vaste et compliquée, mais elle est constituée de modules simples, adaptables à des buts très variés. Ces modules simples sont alors utilisés en grand nombre. Aux figures 1 et 2, un appareil de mesure 1 d'une grandeur physique, telle qu'une température, une pression, un débit, une intensité de courant etc., est disposé en un endroit choisi de l'installation à commander. Comme un tel appareil de mesure est soumis à des sollicitations diverses et, entre autres, certainement au vieillissement, il est nécessaire de surveiller son bon fonctionnement. Comme cela est bien connu dans ce genre d'installations, le fonctionnement de l'appareil de mesure est contrôlé par deux autres appareils 1' et 1" mesurant la même grandeur physique, sensiblement au même endroit.

Dans un souci de simplicité, la présente description se limite à une installation comprenant trois chaînes et faisant ainsi usage d'une redondance d'ordre 3, bien que des redondances d'ordres supérieurs à 3 soient plus favorables du point de vue de la sécurité et de la disponibilité d'une installation de commande de processus industriel.

Il est bien entendu que l'installation comprend un grand nombre d'autres appareils de mesure tels que 1, 1', 1" que l'on pourrait alors appeler 1a, 1a', 1a"; 1b, 1b', 1b" etc., mais qui ne sont pas représentés. Ces autres appareils, caractérisés par des indices a, b....., mesurent chacun une grandeur physique différente, par exemple "a" une température d'entrée, "b" un débit, "c" une température de sortie etc.

Les appareils de mesure 1, 1' et 1" relatifs à une même grandeur physique peuvent être de même nature tous, par exemple des résistances variables avec la température si la grandeur physique à mesurer est une certaine température. Il est aussi possible d'étendre le principe de polymorphie aux appareils de mesure en vue d'une plus grande sécurité et de choisir des appareils de mesure 1, 1', 1" de nature différente, par exemple une résistance variable avec la température, un bolomètre, une self variable avec la température ou un thermocouple. Les appareils de mesure 1, 1' et 1" fournissent une valeur de sortie analogique et sont à distinguer de détecteurs 2, 2', 2" d'états de fonctionnement qui fournissent des valeurs de sorties logiques.

A chaque détecteur d'état de fonctionnement 2 correspondent deux autres détecteurs 2' et 2" redondants appartenant aux deux autres chaînes. Ces détecteurs 2, 2', 2" signalent par exemple l'état "ouvert" ou "fermé" d'une certaine vanne, l'état "enclenché" ou "déclenché" d'un disjoncteur, le fait d'être dans ou en dehors d'une certaine tolérance etc. L'installation comprend en général un grand nombre de tels détecteurs 2, 2', 2" dont on pourrait appeler les autres 2A, 2A', 2A"; 2B, 2B" etc. mais ces derniers, repérés par A, B....et relatifs à des grandeurs différentes à détecter, ne sont pas représentés.

Les éléments de circuits désignés par des repères dépourvus d'indices supérieurs font partie d'une chaîne de mesure et de traitement de données complètement séparée des deux autres chaînes de mesure et de traitement de données dont les éléments sont repérés par les indices supérieurs 'et". Cette séparation est même une structure en béton dans le cas d'une installation de commande d'une centrale nucléaire.

Les sorties des appareils de mesure 1, 1', 1" sont introduites dans des circuits de conditionnement correspondants 3, 3', 3" qui, chacun transforme la valeur de sortie de l'appareil de mesure en un signal de format standard, facilement transformable en une valeur digitale.

Les signaux de format standard sont par exemple des courants électriques compris entre 4 et 20 milliampères. Les circuits 3, 3', 3" peuvent tenir compte déjà de courbes d'étalonnage et délivrer des signaux proportionnels aux grandeurs physiques qu'ils représentent. Toutefois, cette opération peut aussi être assumée par l'équipement de traitement de données, décrit ci-dessous.

Les signaux de sortie des circuits 3, 3', 3" sont appliqués via des dispositifs d'isolement galvanique 4, 4', 4" et au besoin via d'autres dispositifs d'isolement galvanique 5, 5', 5" et 6, 6', 6 " vers des entrées de commutateurs analogiques 7, 7', 7". Ainsi, le commutateur analogique 7 reçoit à ses entrées respectivement les sorties des dispositifs 4, 5', 6" qui représentent trois mesures différentes d'une même grandeur physique. Pareillement, les commutateurs analogiques 7' et 7" reçoivent à leurs entrées respectivement les sorties des dispositifs 4', 5", 6 et 4", 5, 6'. Les dispositifs 4, 4', 4"; 5, 5', 5"; 6, 6', 6" sont placés par exemple dans les parois des enceintes des différentes chaînes de mesure et de traitement de données.

Chaque commutateur analogique 7,7',7" comprend trois sorties 8,9, 10; 8', 9', 10'; 8", 9", 10". Le nombre des commutateurs 7, 7', 7" correspond au nombre de grandeurs analogiques à contrôler. On pourrait donc à nouveau désigner par des indices a, b.....les autres commutateurs non représentés, et leurs trois sorties 8, 8', 8", 9,9',9" et 10, 10', 10". Ces différentes sorties des commutateurs 7: 8, 8a, 8b..... 9, 9a, 9b.....10, 10a, 10b sont appliquées à l'entrée d'un scrutateur 11 à une seule sortie reliée à un convertisseur analogique-digital 12. La même description est valable pour les sorties des commutateurs 7' et 7", mais pour éviter des répétitions inutiles, seule la chaîne de mesure et de traitement de données comprenant les commutateurs 7, 7a, 7b dont 7 seul est représenté est expliquée ci-dessous. Ceci est fait dans le double but de simplicité et de clarté. Il convient cependant d'ajouter que l'invention est applicable aussi à des installations composées d'une seule chaîne de traitement de données.

Chaque commutateur 7, 7a, 7b....., dont seul 7 est représenté, comprend trois entrées fournies par un multiplexeur 13, alimenté via un convertisseur digital-analogique 14. Le convertisseur digital analogique 14 reproduit à sa sortie une valeur de test correspondant à une valeur déterminée, par exemple une valeur dangereuse mesurée par l'appareil de mesure 1. Comme les appareils de mesure 1, 1' et 1" mesurent en principe la même valeur de la même grandeur physique, le multiplexeur 13 reproduit cette même valeur à l'endroit des trois contacts du dispositif contacteur 7.

Ce multiplexeur 13 travaille à une cadence aussi rapide que le scrutateur. En général, le scrutateur 11 détecte des valeurs simultanées étant donné que les valeurs réelles changent lentement. En position de test cependant, il est possible de faire changer très rapidement les valeurs apparaissant à la sortie du multiplexeur. Cette faculté peut être exploitée pour tester par exemple le fonctionnement d'un circuit de votation incorporé à l'entrée de l'équipement de traitement de données. Dans ce cas, les valeurs à la sortie du multiplexeur 13 changent à la cadence du scrutateur 11. Ce dernier voit alors à son entrée des valeurs simulées, de sortie du commutateur 7, supposées simultanées, différentes qui doivent être comparées dans la partie votation du traitement analogique incorporé au calculateur de processus.

Un auto-test des entrées analogiques se fait par la mesure redondante dans les appareils 1, 1', 1" et un test de cohérence sur les valeurs acquises dans cette partie votation du traitement analogique à l'entrée de l'ensemble de traitement de données.

Le convertisseur digital-analogique 14 est alimenté par un signal sortant de l'équipement de traitement de données. Ce dernier se compose d'un gouverneur programmé 15 et d'un calculateur de processus 16 dont une entrée est reliée via un ensemble séparateur 17 à la sortie du convertisseur analogique-digital 12, lui-même relié à la sortie du scrutateur 11.

Le gouverneur programmé 15 assume les fonctions d'un "chien de garde" , mais ne s'y limite pas; il est doté d'un programme de contrôle fondamentalement différent du programme du calculateur 16, car il n'exécute pas le programme du calculateur 16, mais vérifie seulement si le calculateur suit l'ordre logique des opérations en respectant des limites de temps prédéterminées.

Le calculateur de processus 16 comprend une mémoire d'acquisition des variables analogiques 18, reliée via l'ensemble séparateur 17 au convertisseur analogique-digital 12 et une mémoire d'acquisition des variables logiques 19 reliée via l'ensemble séparateur 17 à un ensemble d'entrées logiques 20 auquel sont reliées les sorties des détecteurs 2, 2A, 2B..... dont 2 seulement est représenté. Il comprend en outre un ensemble de traitement des variables analogiques 21 et un ensemble de traitement des variables logiques 22.

En ce qui concerne le traitement des variables analogiques, le scrutateur 11 permet de faire l'acquisition cyclique de toutes les grandeurs analogiques pour les faire emmagasiner temporairement dans la mémoire 18.

L'ensemble de traitement des variables analogiques 21 assume plusieurs fonctions: a) la fonction d'auto-test des variables analogiques déjà mentionnée. Celle-ci comprend une fonction de voteur 2/3 assurée par une comparaison entr'elles des triples d'entrées homologues tels que les signaux apparaissant simultanément aux sorties 8, 9, 10 des commutateurs 7 et qui sont emmagasinés temporairement dans la mémoire 18 et par l'élimination de l'information issue d'un appareil de mesure défectueux en tenant compte de marges de tolérance; (cette fonction de voteur 2/3 peut être testée par l'application de valeurs de tests différents aux sorties 8, 9, 10 du commutateur, décrit ci-dessus) b) l'émission d'un signal de santé en cas d'absence de défauts; c) l'exécution de divers traitements mathématiques liés à la nature des variables ou paramètres du processus (moyennes, racines, comparaison à des seuils); d) l'élaboration de variables logiques résultant du traitement mathématique des variables analogiques.

Si les différentes valeurs exprimant la même grandeur physique au même endroit apparaissant simultanément aux sorties 8, 9, 10 d'un des commutateurs analogiques 7 n'ont pas été rectifiées en fonction de courbes d'étalonnage à l'endroit des dispositifs 3, 3', 3", cette rectification peut être effectuée à ce stade.

Une partie des variables logiques engendrées dans l'ensemble de traitement analogique 21 peuvent être introduites, tout comme les variables logiques provenant des détecteurs 2, 2A, 2B, dans la mémoire d'acquisition des variables logiques 19. D'autres variables logiques transitant par la mémoire 19 sont engendrées dans l'ensemble de traitement des variables logiques 22 comme résultat d'un cycle de traitement précédent et permettant d'assurer une fonction de mémorisation d'un phénomène transitoire, encore d'autres variables logiques sont engendrées lors du traitement de temporisations. Certaines de ces variables engendrées dans l'ensemble 22 peuvent ne pas transiter par la mémoire 19. Le traitement logique exécuté dans l'ensemble 22 forme un tout indissociable et donne lieu à un nombre déterminé s de sorties dont une seule est représentée. Les variables de sortie sont le résultat d'un traitement complexe, enchevêtré, sur l'ensemble des variables logiques d'entrée transitant par la mémoire 19. Il est évident que si une bonne conception du traitement de données permet d'éviter l'enchevêtrement, tout est mis en oeuvre pour y parvenir. Dans ce dernier cas, dans chaque chaîne des trains de traitement indépendants les unes des autres sont développés et mis en fonctionnement parallèle, en d'autres mots, on peut adopter une structure décentralisée au sein d'une même chaîne. On arrive ainsi à un meilleur confinement des erreurs favorable à la sécurité du système. En effet, une erreur détectée dans un des trains n'entraîne pas nécessairement le blocage complet de ce train. Suivant le type de processus à contrôler, il peut y avoir possibilité d'autoriser des modes de fonctionnement dégradés compatibles avec le fonctionnement du processus. Dans ce but chaque train de cette structure décentralisée serait alors isomorphe par rapport à une chaîne telle que décrite ici.

Entre le calculateur 16 et le gouverneur programmé 15 est disposé un élément de communication, par exemple une mémoire commune 23 dans laquelle sont emmagasinées toutes les données, valeur de départ, valeurs intermédiaires et valeurs finales dont à la fois le calculateur 16 et le gouverneur programmé 15 peuvent avoir besoin, ainsi que des dispositifs de modification de ces données. Une liaison omnibus dont font partie les conducteurs 24 relie la mémoire commune 23 d'une part au gouverneur programmé 15 et d'autre part au calculateur de processus 16.

Le gouverneur programmé comprend, comme élément principal, un contrôleur d'évolution 25 du calcul dans le calculateur de processus 16. Ce dernier surveille le déroulement logique de l'ensemble des opérations et de chaque opération éffectuées par l'ensemble de traitement analogique 21 et l'ensemble de traitement logique 22. Il reçoit pour chaque phase de traitement à effectuer dans un des ensembles du calculateur 16 un signal d'identification de la phase de traitement, un signal de début, et un signal final lorsque la phase de traitement est terminée. Le contrôleur d'évolution 25 est doté d'un programme de la suite logique des différentes opérations à exécuter et des délais maxima admissibles entre l'arrivée du signal de début et l'arrivée du signal final relatives à chaque opération. Avant qu'un des ensembles 21 et 22 n'entame une opération, ce dernier envoie un signal demandant l'autorisation d'exécuter l'opération. Ce signal peut être l'émission du signal d'identification de l'opération à exécuter. En réponse à ce signal , le contrôleur d'évolution 25 délivre un signal d'autorisation d'exécuter l'opération demandée. Ce signal d'autorisation peut être le signal de début. Le signal final peut, au moins dans certains cas, se confondre avec le signal demandant l'autorisation de commencer l'opération suivante. Pendant tout le temps où le contrôleur d'évolution ne constate pas d'anomalie dans l'évolution du programme exécuté par le calculateur de processus 16, il émet un signal de santé. Toute anomalie constatée par le contrôleur d'évolution 25 se traduit par une altération du signal de santé, ces anomalies apparaissent par exemple lorsque la suite des opérations exécutées par le calculateur 16 ne concorde pas avec celle prévue par le gouverneur programmé 15 ou lorsqu'un délai maximum pour l'exécution d'une opération est dépassé. Le signal de santé est envoyé sur un conducteur 26.

La coopération entre le gouverneur programmé 15 et le calculateur de processus 16 constitue un des éléments principaux de l'installation décrite ici. Cette coopération se distingue fondamentalement de la coopération en synchronisme parfait de deux ou plusieurs chaînes de traitement de données identiques ou semblables utilisées pour assurer la sécurité dans des systèmes de commande de sécurité connus. En effet, le gouverneur programmé 15 fonctionne suivant un programme fondalement différent de celui du calculateur 16 et la notion de synchronisme ne trouve ici aucun support. Au contraire, le principe de fonctionnement de l'installation selon l'invention est basé sur un polymorphisme de l' équipement de traitement de données et une liaison conversationnelle entre les unités et sous-ensembles de l'équipement polymorphe. A la limite le gouverneur programmé 15 peut fonctionner en coopération avec deux calculateurs 16 opérant et contrôlés en synchronisme. Les différentes sorties s du calculateur de processus 16 sont appliquées chacune à l'entrée d'un sommateur de sécurité 27 dont un seul est représenté. Tous les sommateurs de sécurité 27 possèdent au moins une entrée 28 à laquelle peut être relié le conducteur 26 véhiculant le signal de santé émis par le contrôleur programmé d'évolution 25 (A la figure 2, une autre variante est représentée qui sera décrite ci-dessous).

La sortie du sommateur de sécurité 27 est appliquée d'une part à l'entrée d'un circuit de votation 2/3 29 et d'autre part via des dispositifs d'isolement galvaniques 30 et 31 aux circuits de votation 29' et 29", non représentés, des deux autres chaînes, non représentées. Le circuit de votation 29 reçoit, via des dispositifs d'isolement galvaniques 30' et 31", les sorties des sommateurs de sécurité 27' et 27", non représentés, des deux autres chaînes, non représentées. La sortie du circuit de votation 29 est appliquée à un dispositif de commande 32 influençant le processus industriel à commander.

L'abandon du synchronisme des équipements de traitement de données la liaison conversationnelle, qui est d'ailleurs de sécurité, établie entre les unités et sous-ensembles de l'équipement polymorphe permet d'incorporer des tests quasi continuels dans le système. Pour ce faire, le gouverneur programmé 15 comprend aussi un ensemble testeur du traitement de données, composé, en l'occurrence, d'un testeur de chaînes analogiques 33, d'un testeur de chaînes logiques 34 et d'un testeur de circuits de votation 2/3 de sortie 35.

Les testeurs des chaînes analogiques 33 des chaînes logiques 34 et des circuits 2/3 35 ont accès à la mémoire commune 23 et comprennent en outre des mémoires locales emmagasinant l'ensemble des valeurs de configurations d'entrée critiques ou dangereuses qui doivent conditionner des interventions d'alerte, de protection et de sécurité. Ils émettent respectivement sur un conducteur 36, 37, 38 des signaux de santé qui, de préférence, sont introduits dans un générateur d'un signal de santé commun 39 dont la sortie 40 est reliée à l'entrée 28 du sommateur de sécurité 27.

Le conducteur 26, véhiculant le signal de santé issu du contrôleur d'évolution 25 peut être appliqué aussi à l'entrée du générateur 39, comme cela est représenté sur le dessin. Il est aussi concevable d'appliquer le conducteur 26 à une troisième entrée, non représentée de tous les sommateurs de sécurité 27.

L'ensemble testeur composé des dispositifs 33, 34, 35 entre en jeu périodiquement, par exemple après chaque cycle du scrutateur 11 ou régulièrement, après un certain nombre déterminé de cycles. L'intervention de l'ensemble testeur est commandé par un dispositif 41, relié aux sorties 40' et 40" des générateurs de signal de santé, non représentés, des deux autres chaînes, non représentées. Un circuit d'inhibition dans le dispositif 41 empêche l'intervention de l'ensemble testeur lorsqu'
une des autres chaînes est soit en panne, soit en période de test, car
dans ces deux cas, le signal de santé correspondant est altéré.

En période de test, le testeur de chaînes analogiques 33 commute
les commutateurs analogiques 7 et leur envoie alors via le convertisseur
digital-analogique 14 et le multiplexeur 13 un ensemble de valeurs dangereuses simulées. Simultanément, un signal est envoyé par le testeur
33 vers le générateur 39 pour supprimer à sa sortie 40 l'émission du
signal de santé. Comme la sortie 40 est appliquée aux dispositifs 41'
et 41", non représentés, des deux autres chaînes, non représentées,
aucune de ces autres chaînes ne peut se mettre en position de test en
même temps que celle représentée.

Le testeur des chaînes logiques 34 applique des configurations de
valeurs de test via des commutateurs digitaux 42 localisés dans la mémoire commune 23 et il contrôle l'effet du test par rapport aux sorties
s du calculateur de processus 16.

Le testeur des circuits 29 de votation 2/3 applique des configurations de test via des commutateurs digitaux 43, 44, 45 et il contrôle
l'effet du test par rapport aux sorties des circuits 29.

Un aspect important concernant le contrôle permanent de l'ensemble
de traitement des variables logiques 22 est un auto-test des variables
logiques, constitué par l'intervention de l'ensemble gouverneur programmé 15 dans le traitement des variables logiques dans le calculateur
de processus 16 par l'intermédiaire d'un commutateur 46 permettant de
substituer des valeurs logiques d'entrée en logique indirecte aux valeurs logiques d'entrée en logique directe et inversément. Dans le choix
définitif d'une structure, ce commutateur 46 peut être commandé soit
par le gouverneur programmé 15, soit par le calculateur de processus
16 mais il ne peut être commandé par les deux à la fois. De toute façon, aussi bien le gouverneur programmé 15 que le calculateur 16 en contrôlent le fonctionnement.

Mis à part la redondance de chaque détecteur 2 par les détecteurs
2' et 2", les différents détecteurs 2, 2A, 2B... d'une même chaîne
fournissent des variables logiques ou indications d'états de fonctionnement toutes en une même logique soit directe, soit inverse. Si un tel
détecteur 2, 2A, 2B.. tombe en panne, son indication reste figée.
L'invention permet non seulement de le détecter mais en plus de détecter n'importe quelle panne interne au traitement logique résultant d'une défaillance du calculateur de processus. En effet, l'ensemble de traitement de variables logiques qui est prévu, par exemple pour un nombre n d'entrées et agencé pour fournir un nombre s de sorties, est programmé pour fournir à chacune de ses s sorties une valeur fonctionnelle, la même en logique directe qu'en logique indirecte, lorsque les n entrées sont respectivement en logique directe ou en logique indirecte. Les s sorties du calculateur de processus ont donc un caractère dynamique, imposé, comme décrit ci-dessous par le commutateur 46, en fonctionnement normal. C'est le rôle des sommateurs de sécurité 27 d' effectuer le redressement du signal dynamique.

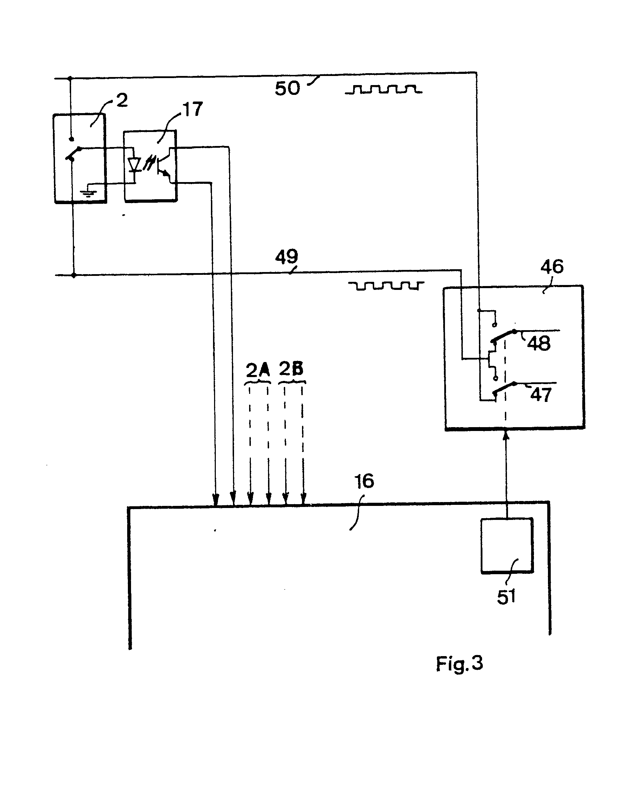

Pour rendre dynamiques les valeurs logiques d'entrée, le commutateur 46 est disposé dans le circuit d'alimentation des détecteurs 2. La figure 3 représente plus en détail un exemple d'un tel commutateur 46. Deux potentiels, par exemple OV et 5V, amenés respectivement sur des conducteurs 47 et 48, sont appliqués aux contacts mobiles du commutateur 46. Les contacts fixes du commutateur 46 alimentent une paire de conducteurs 49 et 50 auxquels sont branchés tous les détecteurs 2, 2A, 2B.... d'une même chaîne. reliés au calculateur de processus 16 via l'ensemble séparateur d'isolement galvanique 17. Une horloge 51, localisée, en l'occurrence, dans le calculateur de processus 16 actionne le commutateur 46, par exemple à une cadence régulière. De ce fait, les n valeurs d'entrée de la mémoire d'acquisition 19 ou de l'ensemble de traitement des variables logiques 22 se présentent à la cadence régulière de l'horloge, une fois en logique directe, et une fois en logique indirecte. De même, les signaux apparaissent aux s sorties de l'ensemble de traitement des variables logiques 22 se présentent sous forme d' un signal alternatif rectangulaire à la cadence de l'horloge 51 puisque les deux valeurs fonctionnelles sont représentées, une en logique directe par la valeur 1 et en logique indirecte par la valeur 0 et 1' autre en logique directe par la valeur 0 et en logique indirecte par la valeur 1.

Comme, dans ce cas le signal de santé appliqué à l'entrée 28 du sommateur de sécurité 27 doit être comparé à un signal alternatif battant à la cadence de l'horloge 51, le signal de santé est de préférence un signal alternatif battant à la même cadence, émis sur le conducteur 26, pour être appliqué directement à l'entrée 28 du sommateur de sécurité 27 ou, comme cela est représenté, à l'entrée du générateur 39 pour moduler la sortie 40 de ce générateur de signal de santé commun 39.

Le polymorphisme de l'installation de commande de sécurité suivant l'invention n'est pas limité aux unités et sous-ensembles des équipements de traitement de chaque chaîne, mais est réalisable aussi et de manière très large entre les différents équipements des différentes chaînes. Cela est possible, car entre ces différentes chaînes il n'existe qu'une liaison conversationnelle via les dispositifs d'isolement galvanique 30, 30', 30", 31, 31', 31" (dont seulement 30, 31, 30' et 31" figurent sur le dessin) transmettant les signaux de sortie des sommateurs de sécurité 27, et les sommateurs 27' et 27", non représentés, ainsi qu' une liaison via les dispositifs d'isolement galvaniques 52, 52', 52"; 53, 53', 53" (dont seulement 52, 53, 52' et 53" figurent sur le dessin) transmettant les signaux de santé communs. Par conséquent, dans les différents équipements de traitement de données 15, 16; 15', 16'; 15", 16" on peut utiliser des équipements différents, utilisant des langages de programmation différents et de ce fait aussi des programmes différents. Ce polymorphisme permet alors même de découvrir les erreurs de conception de programme ce qui n'est pas possible au moyen d'équipements identiques fonctionnant en parallèle et en synchronisme. D'autre part, grâce à l'incorporation des fonctions de test dans le programme, en exécutant par exemple chaque seconde un test d'un nombre élevé de tests par exemple 300, on teste toutes les 5 minutes les 300 configurations réputées critiques ou dangereuses. Ceci permet de contrôler le bon fonctionnement de l'installation pour les configurations d'entrée qui doivent être reconnues avec sécurité et pour lesquels des interventions d'urgence déterminées doivent être déclenchées.

REVENDICATIONS

1. Installation de commande de sécurité de processus industriel constituée d'au moins une chaîne comprenant des appareils (1,2) mesurant ou détectant des variables de processus, un équipement de traitement de données (15,16) associé à au moins un calculateur de processus (16) dont les entrées sont alimentées par les dits appareils (1,2) et des dispositifs de commande (32) influençant le processus, actionnés par les sorties du dit équipement de traitement de données (15,16), caractérisée en ce que dans chaque chaîne l'équipement de traitement de données comprend un ensemble gouverneur programmé (15) composé d'un contrôleur programmé d'évolution (25) du traitement de données relié au calculateur de processus (16), en ce que le calculateur de processus (16) émet vers le contrôleur programmé d'évolution (15) pour chaque phase de traitement de données à effectuer, un signal d'identification de la phase en question, attend de recevoir du contrôleur programmé d'évolution (25) un signal de début permettant l'exécution de la phase de traitement de donnée identifiée et émet à la fin de cette phase, un signal final vers le contrôleur programmé (25), en ce que le contrôleur programmé vérifie la suite logique des différentes phases de traitement de données exécutées par le calculateur (16) et contrôle le temps consacré à l'exécution de chaque phase pour émettre un signal de santé, si tout est normal et en ce qu'un sommateur de sécurité (27) est disposé en aval de chaque sortie du calculateur de processus (16) et en amont du dispositif de commande (32) influençant le processus qu'il actionne, correspondant à cette sortie, chacun de ces sommateurs (27) étant relié au contrôleur programmé d'évolution (25) pour recevoir le dit signal de santé, chacun de ces sommateurs (27) se mettant dans une condition de sortie dite "de sécurité"lorsqu'un des signaux de santé présente une anomalie.

2. Installation de commande de sécurité suivant la revendication 1, caractérisée en ce que le calculateur de processus (16), comprend un ensemble de traitement de variables logiques (22) prévu pour un nombre n déterminé d'entrées et programmé pour fournir un nombre s déterminé de sorties, en ce que l'ensemble de traitement de variables logiques (22) est programmé pour fournir une même valeur fonctionnelle en logique directe ou indirecte lorsque les entrées sont en logique directe ou indirecte, en ce que les entrées de l'ensemble de traitement logique sont reliées à des appareils de détection ou générateurs de variables logiques (2) influencés par un commutateur de logique (46) actionné par le contrôleur programmé d'évolution (25) ou le calculateur de processus (16) et fournissent suivant sa position les valeurs en logique directe ou indirecte des entrées et en ce que le signal de santé émis par le contrôleur programmé d'évolution est commuté, à la cadence des commutateurs de logique, entre les deux valeurs que peuvent prendre les sorties appliquées simultanément avec le signal de santé aux sommateurs de sécurité (27).

3. Installation suivant la revendication 1, caractérisée en ce que l'ensemble gouverneur programmé (15) est composé en outre d'un testeur (33,34,35) du traitement de données comprenant une ou plusieurs mémoires pour des configurations d'entrée déterminées à substituer aux entrées réelles, en ce qu'un ou plusieurs dispositifs commutateurs de tests (7,42,43,44,45) sont disposés en amont des entrées du calculateur (16) et des circuits de votation 2/3 (29) et reliés à, et actionnés par l'ensemble gouverneur programmé (15) pour permettre la substitution des configurations d'entée déterminées aux entrées réelles et de vérifier les réponses du calculateur et des circuits de votation et en ce que le testeur de données (33,34,35) émet un ou plusieurs signaux de santé appliqués aux sommateurs de sécurité 27, en fonction du résultat de cette vérification.

4. Installation suivant les revendications 2 et 3, caractérisée en ce que le signal de santé émis par le testeur de données (33,34,35) appliqué aux sommateurs de sécurité (27) est commandé à la cadence du commutateur de logique (46).

5. Installation suivant une des revendications précédentes, caractérisée en ce que des signaux de santé individuels du contrôleur programmé d'évolution (25) et du testeur (33, 34, 35) sont appliqués à un générateur de signal de santé commun (39) émettant un signal de santé commandé à la cadence du commutateur de logique (46).

6. Installation suivant une des revendications 3, 4 ou 5, caractérisé en ce que l'ensemble gouverneur programmé (15) comprend un dispositif de commande (41) à actionnement cyclique commandant à intervalles déterminés l'exécution de tests.

7. Installation suivant une des revendications précédentes, caractérisée en ce qu'elle comprend plusieurs chaînes parallèles redondantes dont les équipements de traitement de données fonctionnent de manière indépendante l'un de l'autre et en ce que ces chaînes ont des liaisons l'une avec l'autre après la sortie des sommateurs de sécurité (27) seulement.

8. Installation suivant la revendication 7, caractérisée en ce que les dispositifs de commande (41) à actionnement cyclique des ensembles gouverneurs (15) des différentes chaînes sont dotés de circuits d'inhibition auxquels sont appliqués les signaux de santé des autres chaînes pour empêcher que l'exécution de tests soit commandée en cas de panne d'une chaîne, ou simultanément, dansdeux ou plusieurs chaînes.

9. Installation suivant une des revendications 7 ou 8 caractérisée en ce que des dispositifsd'isolement galvanique (5,6,5',6', 5",6") entre les appareils de mesure correspondants (1, 1', 1") des différentes chaînes et l'entrée d'un dispositif traitement analogique (21) coopèrent pour contrôler le fonctionnement normal des appareils de mesure (1,1',1").

Fig.1

0033785

Fig. 2

Fig.3

Office européen
des brevets

**RAPPORT DE RECHERCHE EUROPEENNE**

0033785

Numéro de la demande

EP 80 20 0105.7

| Catégorie | Citation du document avec indication, en cas de besoin, des parties pertinentes | Revendication concernée |
|---|---|---|
| | **DOCUMENTS CONSIDERES COMME PERTINENTS** | |
| | US - A - 3 424 652 (M. OEHMANN) <br> * revendications; abrégé * <br> -- | 1,3, 4 |
| | KERNENERGIE, Vol. 18, No. 1, 1975 <br> R. FUGE et al. "Prozeßrechner in Kern- <br> kraftwerken" <br> pages 1 à 11 <br> * pages 7 à 10 * <br> -- | 1-3, 9 |
| | ELEKTRONIK, No. 11, 1977 <br> Munich <br> K. MEYER "Sicherheitssysteme für <br> elektronisch gesteuerte Anlagen" <br> pages 59 à 64 <br> * pages 62 à 64 * <br> -- | 1,6 |
| | FR - A1 - 2 319 160 (UNITED KINGDOM <br>   ATOMIC ENERGY AUTHORITY) <br> * revendications; pages 1 à 3 * <br> -- | 1,2 |
| | ELEKTRONISCHE RECHENANLAGEN, Vol. 20, <br> No. 3, 1978 <br> Munich <br> S.A. NILSSON "M3R - Ein modulares Mehr- <br> mikrorechner-system mit Restverfügbar- <br> keit und Prozeßsicherungsstruktur" <br> pages 115 à 122 <br> * document complet * <br> -- <br> ./.. | 1 |

**CLASSEMENT DE LA DEMANDE (Int. Cl.3)**

G 05 B   9/03

G 21 D   3/04

G 06 F  11/16

**DOMAINES TECHNIQUES RECHERCHES (Int. Cl.3)**

G 05 B   9/00

G 06 F  11/00

G 06 F  15/00

G 21 C   7/00

G 21 C  17/00

G 21 D   3/00

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

X   Le présent rapport de recherche a été établi pour toutes les revendications

| Lieu de la recherche | Date d'achèvement de la recherche | Examinateur |
|---|---|---|
| Berlin | 23-10-1980 | BEYER |

OEB Form 1503.1   06.78

0033785

RAPPORT DE RECHERCHE EUROPEENNE

Office européen
des brevets

EP 80 20 0105.7

Numéro de la demande

- page 2 -

| Catégorie | Citation du document avec indication, en cas de besoin, des parties pertinentes | Revendication concernée | CLASSEMENT DE LA DEMANDE (Int. Cl.3) |
|---|---|---|---|
| | **DOCUMENTS CONSIDERES COMME PERTINENTS** | | |
| A | PROCEEDINGS OF THE IEEE, Vol. 66, No. 10, 1978, New York<br>H. IHARA et al. "Fault-Tolerant Computer System with Three Symmetric Computers" pages 1160 à 1177<br>-- | | |
| A | DE – B – 2 020 940 (SIEMENS AG)<br>-- | | |
| D | BE – A – 847 141 (ATELIERS DE CONSTRUCTIONS ELECTRIQUES DE CHARLEROI)<br>---- | | DOMAINES TECHNIQUES RECHERCHES (Int. Cl.3) |